# FASCICULE DE BREVET EUROPEEN

(11) **EP 3 826 922 B1**
(45) Date de publication et mention de la délivrance du brevet: **07.06.2023**
(21) Numéro de dépôt: 19740411.4
(22) Date de dépôt: 22.07.2019
(51) Int. Cl.: B64F 1/14

(54) **SYSTÈME ET PROCÉDÉ D'AMARRAGE D'UN ENGIN AÉRIEN DE TYPE AÉROSTAT OU BALLON DIRIGEABLE**
SYSTEM UND VERFAHREN ZUM FESTMACHEN EINES LUFTFAHRZEUGS VOM TYP EINES AEROSTATS ODER LENKBALLONS
A SYSTEM AND METHOD FOR MOORING AN AERIAL VEHICLE OF THE AEROSTAT OR DIRIGIBLE BALLOON TYPE

(30) Priorité: 23.07.2018 FR 1856804
(43) Date de publication de la demande: 02.06.2021
(73) Titulaire: Groupe ADF, 13127 Vitrolles (FR)
(72) Inventeur: LUSINCHI, Jean-Marie, 13127 Vitrolles (FR)
(74) Mandataire: Germain Maureau
(86) Numéro de dépôt international: PCT/EP2019/069713
(87) Numéro de publication internationale: WO 2020/020842

(56) Documents cités:
- CN-A- 106 585 744
- KR-A- 20100 065 856
- US-A- 4 421 286

## Description

La présente invention se rapporte à un système d'amarrage pour un amarrage et une manutention au sol d'un engin aérien de type aérostat ou ballon dirigeable, ainsi qu'à un procédé d'amarrage utilisant un tel système d'amarrage.

L'invention concerne le domaine de l'amarrage des engins aériens de type aérostat ou ballon dirigeable, exploités notamment, à titre d'exemple non limitatif, pour des programmes de fret de matériels ou de communication/surveillance, et pour lesquels il est nécessaire de proposer des moyens d'amarrage ayant la capacité de les amarrer au sol, les maintenir au sol, les déplacer au sol, les capter en phase d'aterrissage, les larguer en phase de décollage, les stocker et les avitailler.

Dans le domaine, il est connu du document EP 0 754 140 de proposer un système d'amarrage comprenant une plateforme pivotante sur rail et dont les dimensions sont équivalentes à celles de l'engin aérien pour un amarrage avant et arrière sur cette même plateforme, étant indiqué qu'un engin aérien de ce type peut dépasser les 100 à 120 mètres de long. Cependant, ce système d'amarrage est très onéreux et complexe pour réaliser une plateforme monobloc déplaçable de cette envergure, sans compter qu'il offre peu de souplesse quant il faut gérer au sol, en phase d'aterrissage, en phase de décollage ou en phase de stockage, une flotte de plusieurs engins aériens, dont les dimensions peuvent varier de l'un à l'autre.

Il est également connu du document WO 03/055746 un système d'amarrage comprenant une tour d'amarrage avant et un chariot d'amarrage arrière déplaçables sur les mêmes rails. Cependant, la tour d'amarrage avant et le chariot d'amarrage arrière sont solidaires des rails, autrement dit leurs fonctions de transport sur les rails sont solidaires de leurs fonctions d'amarrage, ce qui limitent leurs utilisations à un seul engin aérien à la fois, offrant donc également peu de souplesse quant il faut gérer une flotte de plusieurs engins aériens.

L'état de la technique peut également être illustré par l'enseignement du document US 4 421 286 qui divulgue un système d'amarrage comprenant un mât d'amarrage monté solidairement sur un véhicule de transport, ce qui présente aussi l'inconvénient que la fonction de transport est solidaire de la fonction d'amarrage, limitant ainsi son utilisation.

Un autre système d'amarrage est connu du document CN 106 585 744 A, qui est conforme au préambule de la revendication 1 et qui comprend un mât d'amarrage monté solidairement sur une semi-remorque adaptée pour être ancrée à un véhicule tracteur routier.

La présente invention a pour but de résoudre en tout ou partie les inconvénients précités, en proposant un système d'amarrage qui permet de désolidariser la fonction de transport des autres fonctions dont la fonction d'amarrage, ce qui va permettre de mutualiser la fonction de transport pour plusieurs engins aériens, que ce soit au sol, en phase d'aterrissage, en phase de décollage ou en phase de stockage.

Un autre but est de réduire le poids transporté par l'engin aérien lorsque ce dernier doit transporter ses propres moyens d'amarrage. En effet, en désolidarisant la fonction de transport de la fonction d'amarrage, l'engin aérien peut se passer de transporter le ou les véhicules de transport, allégeant ainsi grandement la charge transporté.

A cet effet, elle propose un système d'amarrage pour un amarrage et une manutention au sol d'un engin aérien de type aérostat ou ballon dirigeable, ce système d'amarrage comprenant :
- une plateforme sur laquelle est monté un mât d'amarrage, et
- une structure porteuse apte à supporter la plateforme sur le sol,

où la plateforme présente au moins un plateau supérieur qui est surélevé par rapport au sol et qui délimite une zone de réception conformée pour recevoir un véhicule autonome en-dessous du plateau supérieur, et
ce plateau supérieur supporte au moins un dispositif de levage placé au-dessus de la zone de réception et configurable entre :
   - une configuration de repos autorisant une réception d'un véhicule autonome dans la zone de réception sous le plateau supérieur et un retrait d'un véhicule autonome hors de la zone de réception, et
   - une configuration de levage dans laquelle le dispositif de levage est apte à lever l'ensemble plateforme/structure porteuse et à décoller la structure porteuse du sol en prenant appui sur le véhicule autonome lorsque ce dernier est présent dans la zone de réception sous le plateau supérieur, autorisant ainsi un transport du système d'amarrage par le véhicule autonome.

Ainsi, grâce à un tel système d'amarrage, la fonction d'amarrage est remplie par le système d'amarrage seul, tandis que la fonction de transport est remplie par le ou les véhicules autonomes qui sont eux indépendants du système d'amarrage, dans la mesure où ils peuvent être :
- d'une part, solidarisés au système d'amarrage grâce à la ou les plateaux supérieurs et au(x) dispositif(s) de levage, et ainsi permettre le transport du système d'amarrage ; et
- d'autre part, désolidarisés du système d'amarrage pour pouvoir être utilisés à d'autres fins, notamment pour le transport d'un autre système d'amarrage afin de gérer un autre engin aérien, ce qui permet donc de mutualiser le ou les véhicules autonomes pour plusieurs systèmes d'amarrage et donc pour plusieurs engins aériens, garantissant au final une grande souplesse quant il faut gérer au sol, en phase d'aterrissage, en phase de décollage ou en phase de stockage, une flotte de plusieurs engins aériens.

Selon une caractéristique, la plateforme présente deux plateaux supérieurs définissant deux zones de réception pour recevoir deux véhicules autonomes en-dessous des deux plateaux supérieurs.

Selon une autre caractéristique, les plateaux supérieurs sont disposés de part et d'autre du mât d'amarrage.

Dans une réalisation particulière, la plateforme présente un plateau central sur lequel est monté le mât d'amarrage, et les plateaux supérieurs sont disposés de part et d'autre de ce plateau central.

Par ailleurs, les plateaux supérieurs sont surélevés par rapport au plateau central ou sont au même niveau que le plateau central.

Avantageusement, le ou chaque plateau supérieur supporte au moins deux dispositifs de levage placés au-dessus de la zone de réception concernée.

Dans un mode de réalisation particulier, le dispositif de levage comprend une pièce mobile qui est déplaçable sur le dessous du plateau supérieur entre :
- une position déployée dans laquelle la pièce mobile saille sur le dessous du plateau supérieur d'une distance de déploiement prédéfinie pour être dans la configuration de levage ;
- une position rétractée dans laquelle la pièce mobile ne saille pas sur le dessous du plateau supérieur ou saille d'une distance de rétractation inférieure à la distance de déploiement pour être dans la configuration de repos.

Selon une possibilité de l'invention, la pièce mobile du dispositif de levage est déplaçable en translation, et en particulier en translation verticale.

Dans une réalisation particulière, le dispositif de levage est un vérin comprenant un corps fixé sur le plateau supérieur et une tige montée mobile dans le corps et formant la pièce mobile.

Avec un tel vérin, le corps peut par exemple être fixé sur le dessus du plateau supérieur et la tige traverse le plateau supérieur pour être déplaçable sur le dessous du plateau supérieur.

Selon une autre possibilité de l'invention, la zone de réception s'étend selon une direction longitudinale s'étendant entre l'avant et l'arrière de la plateforme.

Avantageusement, la zone de réception est ouverte à ses deux extrémités pour être accessible par un véhicule autonome par l'avant et l'arrière de la plateforme.

Conformément à une autre caractéristique avantageuse de l'invention, le mât d'amarrage supporte en partie haute un dispositif de soutien conformé pour soutenir une partie de l'engin aérien.

Dans un mode de réalisation particulier, le dispositif de soutien comprend une arche ou un anneau propre à épouser au moins partiellement une forme arrondie de la partie de l'engin aérien.

Avantageusement, le dispositif de soutien intègre au moins un élément amortisseur pour amortir le poids de la partie de l'engin aérien à soutenir et procurer ainsi une protection pour ne pas endommager cette partie de l'engin aérien qui repose sur le dispositif de soutien.

La présente invention concerne également la caractéristique selon laquelle l'élément amortisseur est choisi dans la liste comprenant un coussin gonflable, un pneumatique, une bande textile tendue, un amortisseur hydraulique.

Dans une réalisation particulière, le mât d'amarrage supporte en partie haute un dispositif d'ancrage de nez pour un ancrage d'un nez de l'engin aérien.

L'invention se rapporte également à un ensemble d'amarrage pour un amarrage et une manutention au sol d'un engin aérien de type aérostat ou ballon dirigeable, cet ensemble d'amarrage comprenant :
- au moins un système d'amarrage conforme à l'invention, et
- au moins un véhicule autonome, dans lequel le véhicule autonome est conformée pour s'engager dans la zone de réception sous le plateau supérieur de la plateforme du système d'amarrage ;
dans lequel l'ensemble d'amarrage est configurable entre :
- une configuration statique, fixe sur le sol, dans laquelle le dispositif de levage du système d'amarrage est en configuration de repos et ainsi la structure porteuse du système d'amarrage repose sur le sol, ladite configuration statique étant exploitable pour des opérations de stockage du système d'amarrage dans une zone de stockage et pour des opérations d'amarrage et de manutention au sol de l'engin aérien dans une zone de travail ; et
- une configuration mobile, dans laquelle le véhicule autonome est engagé dans la zone de réception sous le plateau supérieur, et le dispositif de levage du système d'amarrage est en configuration de levage en prenant appui sur le véhicule autonome et ainsi la structure porteuse du système d'amarrage est décollée du sol, autorisant ainsi un transport du système d'amarrage par le véhicule autonome, notamment entre la zone de stockage et la zone de travail

Dans un mode de réalisation particulier, le véhicule autonome est un véhicule à guidage automatique ou un véhicule sur rail.

A titre d'exemple non limitatif, le véhicule à guidage automatique peut être guidé par filoguidage (guidage par fil) ou par géolocalisation.

Selon une première possibilité, le véhicule autonome est un véhicule roulant, par exemple à motorisation thermique, électrique ou similaire.

Selon une seconde possibilité, le véhicule autonome est un véhicule glissant tel qu'un aéroglisseur ou équivalent, ce qui offre l'avantage en cas d'arrêt des ventilateurs, et donc de suppression du coussin d'air, de transformer l'aéroglisseur (ancre flottante) en lest (ancre fixe), et ce de manière réversible, via la remise en marche des ventilateurs pouvant être couplée à un asservissement à une mesure de la tension dans les amarres. L'emploi d'un tel véhicule glissant présente ainsi un avantage en termes de limitation de la consommation énergétique et de la pollution sonore lorsque l'engin aérien est positionné dans l'axe d'un vent stabilisé en orientation ou en cas d'absence de vent.

L'invention se rapporte aussi à une paire de systèmes d'amarrage pour un amarrage et une manutention au sol d'un engin aérien de type aérostat ou ballon dirigeable, cette paire de systèmes d'amarrage comprenant deux systèmes d'amarrage conformes à l'invention, avec un premier système d'amarrage pour un amarrage d'une partie avant de l'engin aérien et un second système d'amarrage pour un amarrage d'une partie arrière de l'engin aérien, le premier système d'amarrage étant non relié physiquement au second système d'amarrage.

Selon une variante, le premier système d'amarrage et le second système d'amarrage sont pilotés en déplacement par géolocalisation lorsqu'ils sont en en phase de transport au moyen de véhicules autonomes.

Selon une autre variante, le premier système d'amarrage et le second système d'amarrage sont pilotés en déplacement par un asservissement maitre/esclave (liaison virtuelle), lorsqu'ils sont en en phase de transport au moyen de véhicules autonomes.

L'invention concerne également un procédé d'amarrage pour un amarrage et une manutention au sol d'un engin aérien de type aérostat ou ballon dirigeable, ce procédé d'amarrage consistant à utiliser :
- au moins un système d'amarrage conforme à l'invention, et
- au moins un véhicule autonome, dans lequel le véhicule autonome est conformée pour s'engager dans la zone de réception sous le plateau supérieur de la plateforme du système d'amarrage,
un tel procédé d'amarrage comprenant les étapes suivantes :
- stocker le système d'amarrage dans une zone de stockage, avec le dispositif de levage du système d'amarrage en configuration de repos afin que la structure porteuse du système d'amarrage repose sur le sol dans la zone de stockage ;
- engager le véhicule autonome dans la zone de réception sous le plateau supérieur ;
- déplacer le dispositif de levage vers la configuration de levage en prenant appui sur le véhicule autonome, afin de décoller la structure porteuse du sol, autorisant ainsi un transport du système d'amarrage par le véhicule autonome ;
- transporter le système d'amarrage avec le véhicule autonome à destination d'une zone de travail ;
- effectuer des opérations d'amarrage de l'engin aérien sur le système d'amarrage qui est positionné dans la zone de travail.

Selon une possibilité, après le transport du système d'amarrage dans la zone de travail, le dispositif de levage est déplacé vers la configuration de repos, afin que la structure porteuse du système d'amarrage repose sur le sol et soit statique dans la zone de travail et afin que le véhicule autonome soit libéré.

D'autres caractéristiques et avantages de la présente invention apparaîtront à la lecture de la description détaillée ci-après, de plusieurs exemples de mise en oeuvre non limitatifs, faite en référence aux figures annexées dans lesquelles :
- les figures 1, 2 et 3 sont des vues respectivement de côté, de devant et de derrière d'une paire de systèmes d'amarrage selon l'invention, comprenant deux systèmes d'amarrage conformes à l'invention en phase d'amarrage d'un engin aérien ;
- la figure 4 est une vue en perspective de l'un des deux systèmes d'amarrage de la figure 1, en l'occurrence le premier système d'amarrage pour un amarrage d'une partie avant de l'engin aérien ;
- la figure 5 est une vue en perspective de l'autre des deux systèmes d'amarrage de la figure 1, en l'occurrence le second système d'amarrage pour un amarrage d'une partie arrière de l'engin aérien ;
- la figure 6 est une vue en perspective d'une autre paire de systèmes d'amarrage en phase d'amarrage d'un engin aérien, comprenant un autre premier système d'amarrage conforme à l'invention pour un amarrage d'une partie avant de l'engin aérien et un autre second système d'amarrage pour un amarrage d'une partie arrière de l'engin aérien ;
- la figure 7 est une vue en perspective du premier système d'amarrage de la figure 6 ; et
- la figure 8 est une vue en perspective du second système d'amarrage de la figure 6.

La description détaillée qui suit porte sur plusieurs systèmes d'amarrage 1a, 1b, 10a conformes à l'invention, où ces systèmes d'amarrage 1a, 1b, 10a sont présentés et décrits à titre d'exemples illustratifs et non limitatifs de l'invention. Dans la description qui suit, et sur l'ensemble des figures, des références identiques ou analogues désignent des organes, ensemble d'organes, moyens fonctionnels ou moyens structurels identiques ou analogues pour les différents systèmes d'amarrage 1a, 1b, 10a.

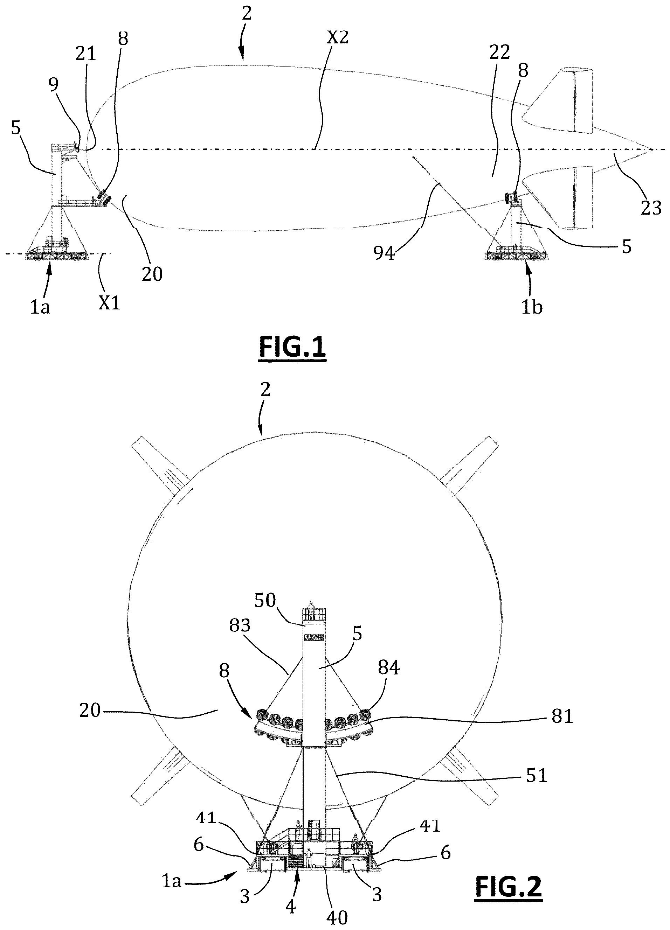

La suite de la description porte sur le mode de réalisation des figures 1 à 5.

Sur la figure 1 est illustré un engin aérien 2 de type aérostat ou ballon dirigeable, en phase d'amarrage au sol au moyen d'un premier système d'amarrage 1a et d'un second système d'amarrage 1b.

Le premier système d'amarrage 1a est prévu pour un amarrage d'une partie avant 20 de l'engin aérien 2, au niveau de son nez 21, et le second système d'amarrage 1b est prévu pour un amarrage d'une partie arrière 22 de l'engin aérien 2, au niveau de sa queue 23 classiquement munie d'ailerons ou d'un empannage.

Le premier système d'amarrage 1a est non relié physiquement au second système d'amarrage 1b, de sorte que ces deux systèmes d'amarrage 1a, 1b peuvent être transportés de manière indépendante. Cependant, pendant les phases de positionnement des deux systèmes d'amarrage 1a, 1b sous l'engin aérien 2 et pendant les phases de transport de l'engin aérien 2 par les deux systèmes d'amarrage 1a, 1b coopérant avec des véhicules autonomes 3, les deux systèmes d'amarrage 1a, 1b sont pilotés en déplacement de manière synchrone et parallèle pour rester en position sous l'engin aérien 2 sans nuire à son amarrage.

Cette synchronisation et ce parallélisme dans les déplacements des deux systèmes d'amarrage 1a, 1b peut par exemple être réalisés par géolocalisation ou par un asservissement maitre/esclave (liaison virtuelle ou radio entre les deux systèmes d'amarrage 1a, 1b).

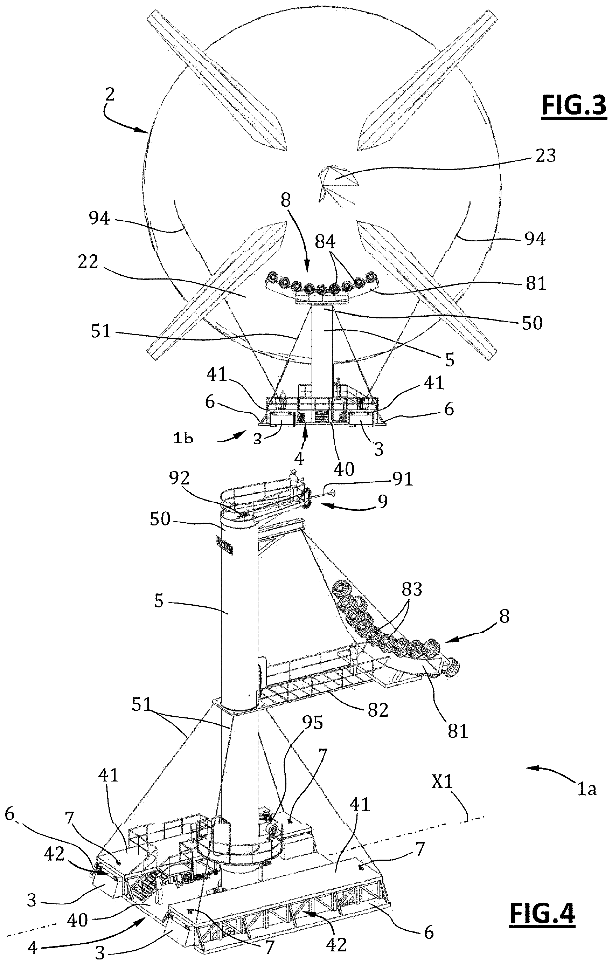

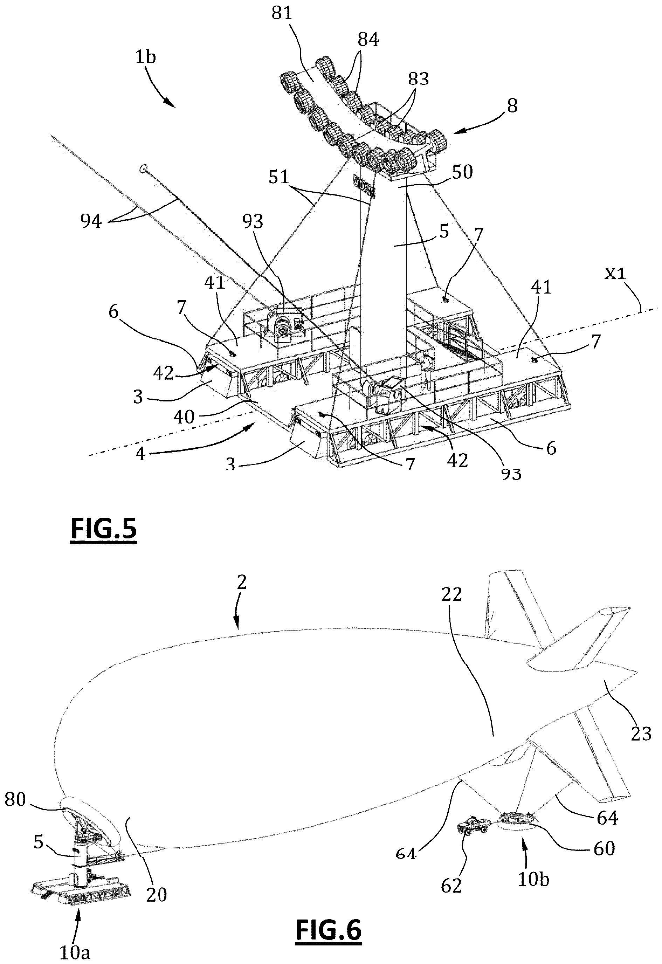

En référence aux figures 4 et 5, chaque système d'amarrage 1a, 1b comprend une plateforme 4 présentant :
- un plateau central 40 sur lequel est monté un mât d'amarrage 5 s'étendant selon une direction verticale Z1 ; et
- deux plateaux supérieurs 41 disposés de part et d'autre de ce plateau central 40 et surélevés par rapport à ce plateau central 40.

Chaque système d'amarrage 1a, 1b comprend également une structure porteuse 6 apte à supporter la plateforme 4 sur le sol. Il est à noter que le plateau central 40 peut également reposer sur le sol, tout comme il est envisageable que le plateau central 40 soit surélevé par rapport au sol, et dans ce cas seule la structure porteuse 6 assure le support du système d'amarrage 1a, 1b sur le sol.

Par contre, les deux plateaux supérieurs 41 sont surélevés par rapport au sol de sorte qu'ils délimitent, de part et d'autre du plateau central 40, deux zones de réception 42 qui se présentent chacune sous une forme générale de couloir avec le plateau supérieur 41 en guise de plafond.

Ces zones de réception 42, sous les plateaux supérieurs 41, sont conformée pour recevoir chacune un véhicule autonome 3 en-dessous du plateau supérieur 41 concerné. Sur les figures, les véhicules autonomes 3 sont de type véhicule roulant à guidage automatique, autrement appelé véhicule autoguidé, sans que l'invention ne soit pour autant limité à ce type de véhicule. Ainsi, à titre de variante non limitative, un ou chaque véhicule autonome 3 peut être du type véhicule glissant tel qu'un aéroglisseur ou équivalent qui se déplace sur coussin d'air.

Les zones de réception 42 s'étendent parallèlement à une direction longitudinale X1 s'étendant entre l'avant et l'arrière de la plateforme 40, avec un alignement entre cette direction longitudinale X1 et une direction longitudinale X2 de l'engin aérien 2 en situation d'amarrage.

Chaque zone de réception 42 est par ailleurs ouverte à ses deux extrémités pour être accessible par un véhicule autonome 3 par l'avant et aussi par l'arrière de la plateforme 4.

Ensuite, chaque plateau supérieur 41 supporte deux vérins 7 écartés l'un de l'autre selon un axe parallèle à la direction longitudinale X1, et disposés de part et d'autre d'un plan médian qui est perpendiculaire à la direction longitudinale X1 et qui passe par le mât d'amarrage 5. Chaque vérin 7 peut être du type électrique, hydraulique, pneumatique ou thermique.

Chaque vérin 7 comprend un corps fixé sur le plateau supérieur 41 et une tige montée mobile dans le corps et formant une pièce mobile déplaçable en translation verticale (ie. parallèlement à la direction verticale Z1 du mât d'amarrage 5).

Le corps de chaque vérin 7 est fixé sur le dessus du plateau supérieur 41 et la tige traverse le plateau supérieur 41 pour être déplaçable sur le dessous du plateau supérieur 41, autrement dit dans la zone de réception 42 concernée.

La tige de chaque vérin 4 est déplaçable entre :
- une position déployée hors du corps, dans laquelle la tige saille sur le dessous du plateau supérieur 41 d'une distance de déploiement prédéfinie ; et
- une position rétractée à l'intérieur du corps, dans laquelle la tige ne saille pas sur le dessous du plateau supérieur ou saille d'une distance de rétractation inférieure à la distance de déploiement.

La tige de chaque vérin 4 est ainsi mobile :
- dans le sens d'une descente vers le bas de la position rétractée vers la position déployée ; et inversement
- dans le sens d'une montée vers le haut de la position déployée vers la position rétractée.

Chaque vérin 7 forme un dispositif de levage placé au-dessus de la zone de réception 42 concernée, et donc au-dessus du véhicule autonome 3 lorsque ce dernier est présent dans ladite zone de réception 42, où ce vérin 7 est configurable entre une configuration de repos et une configuration de levage.

Dans la configuration de repos, la tige du vérin 7 est dans sa position rétractée, ce qui ne bloque pas le passage dans la zone de réception 42 concernée, autorisant ainsi :
- une réception (ou une entrée) du véhicule autonome 3 dans la zone de réception 42 sous le plateau supérieur 41, et également
- un retrait (ou une sortie) du véhicule autonome 3 hors de la zone de réception.

Dans la configuration de levage, la tige du vérin 7 est en position déployée et est ainsi apte à prendre appui sur le véhicule autonome 3 lorsque ce dernier est présent dans la zone de réception 42 sous le plateau supérieur 41, procurant ainsi au fur et à mesure du déploiement de la tige du vérin 7 un levage du système d'amarrage 1a, 1b (ou de l'ensemble plateforme 4/structure porteuse 6) jusqu'à décoller la structure porteuse 6 du sol. Ainsi, le système d'amarrage 1a, 1b ne repose plus sur le sol mais repose sur les véhicules autonomes 3 via les vérins 7, autorisant un transport du système d'amarrage 1a, 1b par les véhicules autonomes 3.

Ainsi, chaque ensemble d'amarrage comprenant deux véhicules autonomes 3 et le premier système d'amarrage 1a, ou le second système d'amarrage 1b, est configurable entre :
- une configuration statique, fixe sur le sol, dans laquelle les vérins 7 sont en configuration de repos et ainsi la structure porteuse 6 du système d'amarrage 1a, 1b repose sur le sol, cette configuration statique étant exploitable pour des opérations de stockage du système d'amarrage 1a, 1b dans une zone de stockage (eg. un hangar) et pour des opérations d'amarrage et de manutention au sol de l'engin aérien 2 dans une zone de travail ; et
- une configuration mobile, dans laquelle les véhicules autonomes 3 sont engagés dans les zones de réception 42 respectives sous les plateaux supérieurs 41, et les vérins 7 sont en configuration de levage en prenant appui sur les véhicules autonomes 3, de sorte que le système d'amarrage 1a, 1b est décollé du sol, autorisant ainsi un transport du système d'amarrage 1a, 1b par les véhicules autonomes 3, notamment entre la zone de stockage et la zone de travail.

Par ailleurs, pour chaque système d'amarrage 1a, 1b, le mât d'amarrage 5 supporte en partie haute un dispositif de soutien 8 conformé pour soutenir une partie de l'engin aérien 2, où ce dispositif de soutien 8 comprend une arche 81 solidarisée au mât d'amarrage 5. Cette arche 81 est par ailleurs munie de plusieurs éléments amortisseurs 84 se présentant sous la forme de deux rangées de pneumatiques prévues pour amortir le poids supporté sans endommager l'enveloppe de l'engin aérien 2.

Dans le cas du premier système d'amarrage 1a, le dispositif de soutien 8 soutient la partie avant 20 de l'engin aérien 2, sous son nez 21. Par ailleurs, l'arche 81 est montée en porte-à-faux sur le mât d'amarrage 5 et est fixée au mât d'amarrage 5 via une passerelle 82 et des haubans 83 fixés entre le mât d'amarrage 5 et l'arche 81.

De plus, le mât d'amarrage 5 de ce premier système d'amarrage 1a supporte en partie haute, au-dessus du dispositif de soutien 8, un dispositif d'ancrage de nez 9 pour un ancrage du nez 21 de l'engin aérien 2.

Ce dispositif d'ancrage de nez 9 est plus particulièrement prévu au sommet 50 du mât d'amarrage 5, tandis que le dispositif de soutien 8 est prévu sensiblement à mi-hauteur du mât d'amarrage 5.

Dans une variante non illustrée, le dispositif de soutien 8 soutient la partie avant 20 de l'engin aérien 2, sur une zone s'étendant jusqu'au nez 21, de sorte que le dispositif de soutien 8 est prévu sensiblement entre la mi-hauteur du mât d'amarrage 5 et la hauteur totale du mât d'amarrage 5, ou le dispositif de soutien 8 soutient la partie avant 20 de l'engin aérien 2 au niveau du nez 21.

Ce dispositif d'ancrage de nez 9 comprend un treuil 95 (qui peut être logé à l'intérieur du mât d'amarrage 5 ou à l'extérieur du mât d'amarrage 5 comme visible sur la figure 4) couplé à un câble d'ancrage 91 prévu pour un ancrage sur le nez 21 de l'engin aérien 2 ; le treuil permettant une mise en tension du câble d'ancrage 91. Ce câble d'ancrage 91 passe notamment par un système de renvoi tel qu'une poulie 92 qui est monté au sommet 50 du mât d'amarrage 5.

Dans le cas du second système d'amarrage 1b, le dispositif de soutien 8 soutient la partie arrière 22 de l'engin aérien 2 et il est prévu au sommet 50 du mât d'amarrage 5. Ainsi, l'arche 81 est fixée sur le sommet 50 du mât d'amarrage 5.

Par ailleurs, ce second système d'amarrage 1b intègre des treuils 93 fixés sur la plateforme 4, et notamment deux treuils 93 fixés sur les plateaux supérieurs 41 respectifs, où ces treuils 93 sont couplés à des câbles d'amarrage 94 prévus pour des amarrages sur les deux côtés de l'engin aérien 2 ; les treuils 93 permettant une mise en tension des câbles d'amarrage 94.

En outre, pour chaque système d'amarrage 1a, 1b, le mât d'amarrage 5 est stabilisé sur la plateforme 4 au moyen d'haubans 51 fixés entre le mât d'amarrage 5 et la plateforme 4. De plus, le mât d'amarrage 5 reçoit intérieurement un escalier pour permettre d'accéder au dispositif de soutien 8 et/ou au dispositif d'ancrage de nez 9.

Ainsi, avec ces deux ensembles d'amarrage, en l'occurrence un premier ensemble d'amarrage comprenant deux véhicules autonomes 3 et le premier système d'amarrage 1a et un second ensemble d'amarrage comprenant deux véhicules autonomes 3 et le second système d'amarrage 1b, il est possible de mettre en oeuvre un procédé d'amarrage pour un amarrage et une manutention au sol de l'engin aérien 2, en réalisant les étapes suivantes :
- stocker les systèmes d'amarrage 1a, 1b dans une zone de stockage, avec leurs vérins 7 en configuration de repos afin que leurs structures porteuses 6 reposent sur le sol dans la zone de stockage ;
- engager les quatre véhicules autonomes 3 dans les zones de réception 42 sous les plateaux supérieurs 41 des deux systèmes d'amarrage 1a, 1b ;
- déplacer les vérins 7 vers leurs configurations de levage respectives en prenant appui sur les véhicules autonomes 3, afin de décoller leurs structures porteuses 6 du sol, autorisant ainsi un transport des deux systèmes d'amarrage 1a, 1b par les véhicules autonomes 3 ;
- transporter les deux systèmes d'amarrage 1a, 1b avec les véhicules autonomes 3 à destination de la zone de travail ;
- effectuer des opérations d'amarrage de l'engin aérien 2 sur les systèmes d'amarrage 1a, 1b qui sont positionnés dans la zone de travail, au moyen notamment de leurs dispositifs de soutien 8 respectifs, du dispositif d'ancrage de nez 9 associé au câble d'ancrage 91 et également des treuils 93 couplés aux câbles d'amarrage 94.

Pour certaines opérations, notamment de manutention ou si les véhicules autonomes 3 doivent servir ailleurs, il est envisageable de déplacer les vérins 7 vers leurs configurations de repos pour libérer les véhicules autonomes 3 et pour que les deux systèmes d'amarrage 1a, 1b reposent sur le sol et soient statique dans la zone de travail.

De plus, une fois l'engin aérien 2 amarré sur les deux systèmes d'amarrage 1a, 1b, il est possible de déplacer l'engin aérien 2 vers une autre zone (par exemple pour un stockage), en pilotant le déplacement des deux systèmes d'amarrage 1a, 1b, via les véhicules autonomes 3, de manière synchrone et parallèle pour rester en position sous l'engin aérien 2 sans nuire à son amarrage.

La suite de la description porte sur le mode de réalisation des figures 6 à 8.

Sur la figure 6 est illustré un engin aérien 2 de type aérostat ou ballon dirigeable, en phase d'amarrage au sol au moyen d'un premier système d'amarrage 10a et d'un second système d'amarrage 10b.

Le premier système d'amarrage 10a est prévu pour un amarrage d'une partie avant 20 de l'engin aérien 2, au niveau de son nez 21, et le second système d'amarrage 10b est prévu pour un amarrage d'une partie arrière 22 de l'engin aérien 2, au niveau de sa queue 23 classiquement munie d'ailerons ou d'un empannage.

Le premier système d'amarrage 10a est proche du premier système d'amarrage 1a décrit ci-dessus, de sorte que nous pouvons nous reporter à la description du premier système d'amarrage 1a si nécessaire.

Ce premier système d'amarrage 10a comprend une plateforme 4, avec un plateau central 40 et deux plateaux supérieurs 41, similaire à celle du premier système d'amarrage 1a à la différence que le plateau central 40 est surélevé par rapport au sol et se situe sensiblement au même niveau que les deux plateaux supérieurs 41.

Ce premier système d'amarrage 10a se distingue également du premier système d'amarrage 1a en ce que son mât d'amarrage 5 supporte à son sommet 50 un dispositif de soutien 80 également conformé pour soutenir une partie avant 20 de l'engin aérien 2, où ce dispositif de soutien 80 comprend un anneau 810 muni d'un élément amortisseur 840 se présentant sous la forme d'un coussin gonflable annulaire prévu pour amortir le poids supporté sans endommager l'enveloppe de l'engin aérien 2.

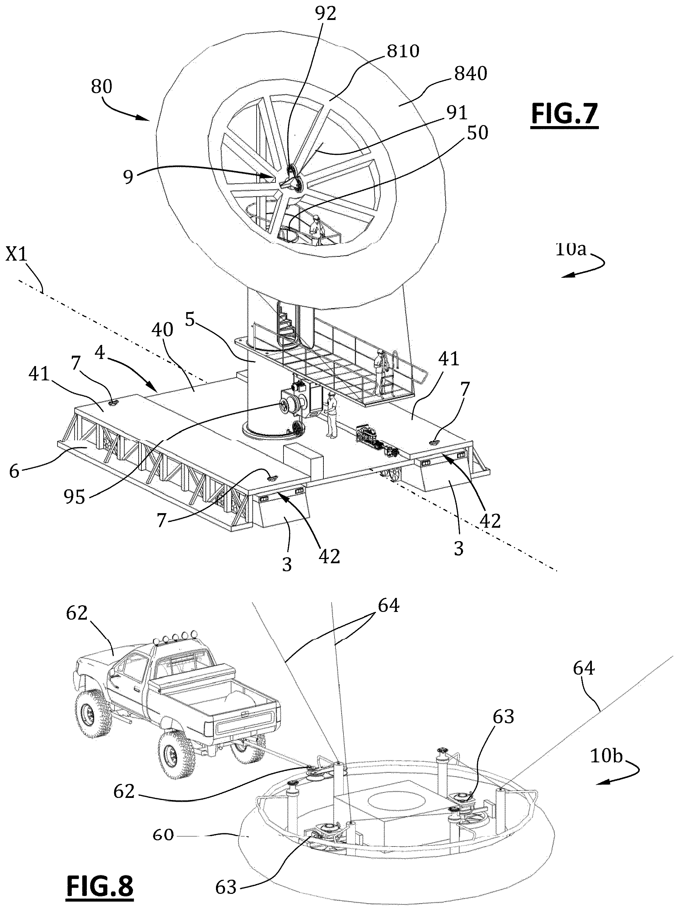

Par ailleurs, le mât d'amarrage 5 de ce premier système d'amarrage 10a supporte aussi un dispositif d'ancrage de nez 9 pour un ancrage du nez 21 de l'engin aérien 2, où ce dispositif d'ancrage de nez 9 est disposé au centre de l'anneau 80 et il comprend un treuil 95 (qui peut être logé à l'intérieur du mât d'amarrage 5 ou à l'extérieur du mât d'amarrage 5 comme visible sur la figure 7) couplé à un câble d'ancrage 91 prévu pour un ancrage sur le nez 21 de l'engin aérien 2 ; le treuil permettant une mise en tension du câble d'ancrage 91. Ce câble d'ancrage 91 passe notamment par un système de renvoi tel qu'une poulie 92 qui est monté au centre de l'anneau 80.

Le second système d'amarrage 10b est par contre différent du second système d'amarrage 1b décrit ci-dessus.

En référence à la figure 8, ce second système d'amarrage 10b comprend une structure porteuse 60 reposant sur le sol et de forme annulaire, cette structure porteuse 60 étant apte à rouler ou glisser sur le sol, et cette structure porteuse 60 étant munie d'un système d'accrochage 61 pour accrocher un autre véhicule autonome 62 (eg. une automobile comme dans l'exemple illustré sur la figure 8, ou bien en variante une véhicule glissant comme un aéroglisseur) qui permet de tirer et déplacer le second système d'amarrage 10b.

Ce second système d'amarrage 10b intègre par ailleurs, à l'intérieur de la structure porteuse 60, des treuils 63 qui sont couplés à des câbles d'amarrage 64 prévus pour des amarrages sur la partie arrière 22 de l'engin aérien 2 ; ces treuils 63 permettant une mise en tension des câbles d'amarrage 64.

Bien entendu, le premier système d'amarrage 1a peut être associé au second système d'amarrage 10b, et de même le premier système d'amarrage 10a peut être associé au second système d'amarrage 1b. Par ailleurs, il serait envisageable de ne prévoir qu'un seul véhicule autonome 3 par système d'amarrage. Enfin, plusieurs tailles de système d'amarrage peuvent être prévues en fonction des dimensions des engins aériens 2.

## Revendications

1. Système d'amarrage (1a; 1b; 10a) pour un amarrage et une manutention au sol d'un engin aérien (2) de type aérostat ou ballon dirigeable, ledit système d'amarrage (1a; 1b; 10a) comprenant une plateforme (4) sur laquelle est monté un mât d'amarrage (5), et une structure porteuse (6) apte à supporter la plateforme (4) sur le sol, la plateforme (4) présentant au moins un plateau supérieur (41) qui est surélevé par rapport au sol et qui délimite une zone de réception (42) conformée pour recevoir un véhicule autonome (3) en-dessous du plateau supérieur (41), ledit système d'amarrage (1a; 1b; 10a) étant **caractérisé en ce que** ledit plateau supérieur (41) supporte au moins un dispositif de levage (7) placé au-dessus de la zone de réception (42) et configurable entre :
- une configuration de repos autorisant une réception d'un véhicule autonome (3) dans la zone de réception (42) sous le plateau supérieur (41) et un retrait d'un véhicule autonome (3) hors de la zone de réception (42), et
- une configuration de levage dans laquelle le dispositif de levage (7) est apte à lever l'ensemble plateforme (4)/structure porteuse (6) et à décoller la structure porteuse (6) du sol en prenant appui sur le véhicule autonome (3) lorsque ce dernier est présent dans la zone de réception (42) sous le plateau supérieur (41), autorisant ainsi un transport du système d'amarrage (1a; 1b; 10a) par le véhicule autonome (3).

2. Système d'amarrage (1a; 1b; 10a) selon la revendication 1, dans lequel la plateforme (4) présente deux plateaux supérieurs (41) définissant deux zones de réception (42) pour recevoir deux véhicules autonomes (3) en-dessous des deux plateaux supérieurs (41).

3. Système d'amarrage (1a; 1b; 10a) selon la revendication 1 ou 2, dans lequel le plateau supérieur (41) supporte au moins deux dispositifs de levage (7) placés au-dessus de la zone de réception (42) concernée.

4. Système d'amarrage (1a; 1b; 10a) selon l'une quelconque des revendications précédentes, dans lequel le dispositif de levage (7) comprend une pièce mobile qui est déplaçable sur le dessous du plateau supérieur (41) entre :
- une position déployée dans laquelle la pièce mobile saille sur le dessous du plateau supérieur (41) d'une distance de déploiement prédéfinie pour être dans la configuration de levage ;
- une position rétractée dans laquelle la pièce mobile ne saille pas sur le dessous du plateau supérieur (41) ou saille d'une distance de rétractation inférieure à la distance de déploiement pour être dans la configuration de repos.

5. Système d'amarrage (1a; 1b; 10a) selon l'une quelconque des revendications précédentes, dans lequel la zone de réception (42) s'étend parallèlement à une direction longitudinale (X1) s'étendant entre l'avant et l'arrière de la plateforme (4).

6. Système d'amarrage (1a; 1b; 10a) selon la revendication précédente, dans lequel la zone de réception (42) est ouverte à ses deux extrémités pour être accessible par un véhicule autonome (3) par l'avant et l'arrière de la plateforme (4).

7. Système d'amarrage (1a; 1b; 10a) selon l'une quelconque des revendications précédentes, dans lequel le mât d'amarrage (5) supporte en partie haute un dispositif de soutien (8 ; 80) conformé pour soutenir une partie (20 ; 21 ; 22) de l'engin aérien (2).

8. Système d'amarrage (1a; 1b; 10a) selon la revendication précédente, dans lequel le dispositif de soutien (8 ; 80) comprend une arche ou un anneau propre à épouser au moins partiellement une forme arrondie de la partie (20 ; 21 ; 22) de l'engin aérien (2).

9. Système d'amarrage (1a; 1b; 10a) selon l'une des revendications 7 et 8, dans lequel le dispositif de soutien (8 ; 80) intègre au moins un élément amortisseur (81 ; 810) choisi dans la liste comprenant un coussin gonflable, un pneumatique, une bande textile tendue, un amortisseur hydraulique.

10. Système d'amarrage (1a; 1b; 10a) selon l'une quelconque des revendications 7 à 9, dans lequel le mât d'amarrage (5) supporte en partie haute un dispositif d'ancrage de nez (9 ; 90) pour un ancrage d'un nez (21) de l'engin aérien (2).

11. Ensemble d'amarrage pour un amarrage et une manutention au sol d'un engin aérien (2) de type aérostat ou ballon dirigeable, ledit ensemble d'amarrage comprenant au moins un système d'amarrage (1a; 1b; 10a) conforme à l'une quelconque des revendications 1 à 10, et comprenant en outre au moins un véhicule autonome (3), dans lequel le véhicule autonome (3) est conformée pour s'engager dans la zone de réception (42) sous le plateau supérieur (41) de la plateforme (4) du système d'amarrage (1a; 1b; 10a), et dans lequel l'ensemble d'amarrage est configurable entre :
- une configuration statique, fixe sur le sol, dans laquelle le dispositif de levage (7) du système d'amarrage (1a; 1b; 10a) est en configuration de repos et ainsi la structure porteuse (6) du système d'amarrage (1a; 1b; 10a) repose sur le sol, ladite configuration statique étant exploitable pour des opérations de stockage du système d'amarrage (1a; 1b; 10a) dans une zone de stockage et pour des opérations d'amarrage et de manutention au sol de l'engin aérien (2) dans une zone de travail ; et
- une configuration mobile, dans laquelle le véhicule autonome (3) est engagé dans la zone de réception (42) sous le plateau supérieur (41), et le dispositif de levage (7) du système d'amarrage (1a; 1b; 10a) est en configuration de levage en prenant appui sur le véhicule autonome (3) et ainsi la structure porteuse (6) du système d'amarrage (1a; 1b; 10a) est décollée du sol, autorisant ainsi un transport du système d'amarrage (1a; 1b; 10a) par le véhicule autonome (3), notamment entre la zone de stockage et la zone de travail.

12. Ensemble d'amarrage selon la revendication 11, dans lequel le véhicule autonome (3) est un véhicule à guidage automatique ou un véhicule sur rail.

13. Paire de systèmes d'amarrage (1a, 1b) pour un amarrage et une manutention au sol d'un engin aérien (2) de type aérostat ou ballon dirigeable, ladite paire de systèmes d'amarrage (1a, 1b) comprenant deux systèmes d'amarrage (1a, 1b) conformes à l'une quelconque des revendications 1 à 10, avec un premier système d'amarrage (1a) pour un amarrage d'une partie avant (20) de l'engin aérien (2) et un second système d'amarrage (1b) pour un amarrage d'une partie arrière (22) de l'engin aérien (2), le premier système d'amarrage (1a) étant non relié physiquement au second système d'amarrage (1b).

14. Paire de systèmes d'amarrage (1a, 1b) selon la revendication 13, dans lequel le premier système d'amarrage (1a) et le second système d'amarrage (1b) sont configurés pour être pilotés en déplacement par géolocalisation ou par un asservissement maitre/esclave lorsqu'ils sont en phase de transport au moyen de véhicules autonomes (3).

15. Procédé d'amarrage pour un amarrage et une manutention au sol d'un engin aérien (2) de type aérostat ou ballon dirigeable, ledit procédé d'amarrage consistant à utiliser au moins un système d'amarrage (1a; 1b; 10a) conforme à l'une quelconque des revendications 1 à 10, et à utiliser également au moins un véhicule autonome (3), dans lequel le véhicule autonome (3) est conformée pour s'engager dans la zone de réception (42) sous le plateau supérieur (41) de la plateforme (4) du système d'amarrage (1a; 1b; 10a),
ledit procédé d'amarrage comprenant les étapes suivantes :
- stocker le système d'amarrage (1a; 1b; 10a) dans une zone de stockage, avec le dispositif de levage (7) du système d'amarrage (1a; 1b; 10a) en configuration de repos afin que la structure porteuse (6) du système d'amarrage (1a; 1b; 10a) repose sur le sol dans la zone de stockage ;
- engager le véhicule autonome (3) dans la zone de réception (42) sous le plateau supérieur (41) ;
- déplacer le dispositif de levage (7) vers la configuration de levage en prenant appui sur le véhicule autonome (3), afin de décoller la structure porteuse (6) du sol, autorisant ainsi un transport du système d'amarrage (1a; 1b; 10a) par le véhicule autonome (3) ;
- transporter le système d'amarrage (1a; 1b; 10a) avec le véhicule autonome (3) à destination d'une zone de travail ;
- effectuer des opérations d'amarrage de l'engin aérien (2) sur le système d'amarrage (1a; 1b; 10a) qui est positionné dans la zone de travail.

## Patentansprüche

1. Andocksystem (1a; 1b; 10a) für das Andocken und die Bodenabfertigung eines Luftfahrzeugs (2) vom Typ Heißluftballon oder Luftschiff, wobei das Andocksystem (1a; 1b; 10a) eine Plattform (4) umfasst, auf der ein Andockmast (5) montiert ist, und eine Tragstruktur (6), die geeignet ist, die Plattform (4) auf dem Boden zu tragen, wobei die Plattform (4) mindestens eine obere Grundplatte (41) aufweist, die in Bezug auf den Boden angehoben ist, und die eine Aufnahmezone (42) eingrenzt, die angepasst ist, um ein autonomes Fahrzeug (3) unterhalb der oberen Grundplatte (41) aufzunehmen, wobei das Andocksystem (1a; 1b; 10a) **dadurch gekennzeichnet ist, dass** die obere Grundplatte (41) mindestens eine Hebevorrichtung (7) trägt, die oberhalb des Aufnahmezone (42) angeordnet ist, und konfigurierbar ist zwischen:
- einer Ruhekonfiguration, die eine Aufnahme eines autonomen Fahrzeugs (3) in der Aufnahmezone (42) unter der oberen Grundplatte (41) ermöglicht, und ein Entfernen eines autonomen Fahrzeugs (3) aus der Aufnahmezone (42), und
- einer Hebekonfiguration, wobei die Hebevorrichtung (7) geeignet ist, die Plattformanordnung (4)/Tragstruktur (6) anzuheben und die Tragstruktur (6) vom Boden abzuheben, indem sie sich auf das autonome Fahrzeug (3) abstützt, wenn sich dieses in der Aufnahmezone (42) unter der oberen Grundplatte (41) befindet, wodurch ein Transportieren des Andocksystems (1a; 1b; 10a) durch das autonome Fahrzeug (3) ermöglicht wird.

2. Andocksystem (1a; 1b; 10a) nach Anspruch 1, wobei die Plattform (4) zwei obere Grundplatten (41) aufweist, die zwei Aufnahmezonen (42) definieren, um zwei autonome Fahrzeuge (3) unterhalb der zwei oberen Grundplatten (41) aufzunehmen.

3. Andocksystem (1a; 1b; 10a) nach Anspruch 1 oder 2, wobei die obere Grundplatte (41) mindestens zwei Hebevorrichtungen (7) trägt, die oberhalb der betreffenden Aufnahmezone (42) angeordnet sind.

4. Andocksystem (1a; 1b; 10a) nach einem der vorhergehenden Ansprüche, wobei die Hebevorrichtung (7) ein bewegliches Teil umfasst, das auf der Unterseite der oberen Grundplatte (41) verschiebbar ist zwischen:
- einer ausgefahrenen Position, in der das bewegliche Teil an der Unterseite der oberen Grundplatte (41) um eine vordefinierte Ausfahrdistanz vorsteht, um in der Hebekonfiguration zu sein;
- einer eingefahrenen Position, in der das bewegliche Teil nicht auf der Unterseite der oberen Grundplatte (41) vorsteht oder um eine Einfahrdistanz vorsteht, die kleiner ist als die Ausfahrdistanz, um in der Ruhekonfiguration zu sein.

5. Andocksystem (1a; 1b; 10a) nach einem der vorhergehenden Ansprüche, wobei sich die Aufnahmezone (42) parallel zu einer Längsrichtung (X1) erstreckt, die sich zwischen der Vorder- und Rückseite der Plattform (4) erstreckt.

6. Andocksystem (1a; 1b; 10a) nach dem vorhergehenden Anspruch, wobei die Aufnahmezone (42) an ihren zwei Enden offen ist, um durch ein autonomes Fahrzeug (3) von der Vorder- und Rückseite der Plattform (4) zugänglich zu sein.

7. Andocksystem (1a; 1b; 10a) nach einem der vorhergehenden Ansprüche, wobei der Andockmast (5) im oberen Bereich eine Stützvorrichtung (8; 80) trägt, die angepasst ist, um einen Bereich (20; 21; 22) des Luftfahrzeugs (2) zu stützen.

8. Andocksystem (1a; 1b; 10a) nach dem vorhergehenden Anspruch, wobei die Stützvorrichtung (8; 80) einen Bogen oder einen Ring umfasst, der dazu geeignet ist, mindestens teilweise einer abgerundeten Form des Bereichs (20; 21; 22) des Luftfahrzeugs (2) zu folgen.

9. Andocksystem (1a; 1b; 10a) nach einem der Ansprüche 7 und 8, wobei die Stützvorrichtung (8; 80) mindestens ein Dämpferelement (81; 810) einbezieht, das aus der Liste ausgewählt ist, die ein Luftkissen, eine Pneumatik, ein gespanntes Textilband und einen hydraulischen Dämpfer umfasst.

10. Andocksystem (1a; 1b; 10a) nach einem der Ansprüche 7 bis 9, wobei der Andockmast (5) im oberen Bereich eine Nasenverankerungsvorrichtung (9; 90) zur Verankerung einer Nase (21) des Luftfahrzeugs (2) trägt.

11. Andockanordnung für das Andocken und die Bodenabfertigung eines Luftfahrzeugs (2) vom Typ Heißluftballon oder Luftschiff, wobei die Andockanordnung mindestens ein Andocksystem (1a; 1b; 10a) nach einem der Ansprüche 1 bis 10 umfasst, und außerdem mindestens ein autonomes Fahrzeug (3) umfasst, wobei das autonome Fahrzeug (3) angepasst ist, um sich in die Aufnahmezone (42) unter der oberen Grundplatte (41) der Plattform (4) des Andocksystems (1a; 1b; 10a) einzubringen, und wobei die Andockanordnung konfigurierbar ist zwischen:
- einer statischen Konfiguration, am Boden festgemacht, wobei die Hebevorrichtung (7) des Andocksystems (1a; 1b; 10a) in einer Ruhekonfiguration ist und somit die Tragstruktur (6) des Andocksystems (1a; 1b; 10a) auf dem Boden ruht, wobei die statische Konfiguration für Vorgänge der Lagerung des Andocksystems (1a; 1b; 10a) in einer Lagerzone nutzbar ist, und für Vorgänge des Andockens und der Bodenabfertigung des Luftfahrzeugs (2) in einer Arbeitszone; und
- einer Bewegungskonfiguration, wobei das autonome Fahrzeug (3) in der Aufnahmezone (42) unter der oberen Grundplatte (41) eingebracht ist, und die Hebevorrichtung (7) des Andocksystems (1a; 1b; 10a) in der Hebekonfiguration ist, indem sie sich auf dem autonomen Fahrzeug (3) abstützt, und somit die Tragstruktur (6) des Andocksystems (1a; 1b; 10a) vom Boden abgehoben ist, wodurch ein Transportieren des Andocksystems (1a; 1b; 10a) durch das autonome Fahrzeug (3) ermöglicht wird, insbesondere zwischen der Lagerzone und der Arbeitszone.

12. Andockanordnung nach Anspruch 11, wobei das autonome Fahrzeug (3) ein selbstführendes Fahrzeug oder ein Schienenfahrzeug ist.

13. Paar von Andocksystemen (1a, 1b) für das Andocken und die Bodenabfertigung eines Luftfahrzeugs (2) vom Typ Heißluftballon oder Luftschiff, wobei das Andocksystempaar (1a, 1b) zwei Andocksysteme (1a, 1b) nach einem der Ansprüche 1 bis 10 umfasst, mit einem ersten Andocksystem (1a) zum Andocken eines vorderen Bereichs (20) des Luftfahrzeugs (2) und einem zweiten Andocksystem (1b) zum Andocken eines hinteren Bereichs (22) des Luftfahrzeugs (2), wobei das erste Andocksystem (1a) physisch nicht mit dem zweiten Andocksystem (1b) verbunden ist.

14. Paar von Andocksystemen (1a, 1b) nach Anspruch 13, wobei das erste Andocksystem (1a) und das zweite Andocksystem (1b) konfiguriert sind, um zur Verschiebung durch Geolokalisierung oder durch eine Master-Slave-Steuerung gesteuert zu werden, wenn sie in der Transportphase mittels autonomer Fahrzeuge (3) sind.

15. Andockverfahren für das Andocken und die Bodenabfertigung eines Luftfahrzeugs (2) vom Typ Heißluftballon oder Luftschiff, wobei das Andockverfahren darin besteht, mindestens ein Andocksystem (1a; 1b; 10a) nach einem der Ansprüche 1 bis 10 zu verwenden, und darin mindestens ein autonomes Fahrzeug (3) zu verwenden, wobei das autonome Fahrzeug (3) angepasst ist, um sich in die Aufnahmezone (42) unter der oberen Grundplatte (41) der Plattform (4) des Andocksystems (1a; 1b; 10a) einzubringen,
wobei das Andockverfahren die folgenden Schritte umfasst:
- Lagern des Andocksystem (1a; 1b; 10a) in einer Lagerzone mit der Hebevorrichtung (7) des Andocksystems (1a; 1b; 10a) in der Ruhekonfiguration, so dass die Tragstruktur (6) des Andocksystems (1a; 1b; 10a) in der Lagerzone auf dem Boden ruht;
- Einbringen des autonomen Fahrzeugs (3) in die Aufnahmezone (42) unter der oberen Grundplatte (41);
- Verschieben der Hebevorrichtung (7) in die Hebekonfiguration, indem sie sich auf das autonome Fahrzeug (3) abstützt, um die Tragstruktur (6) vom Boden abzuheben, wodurch ein Transportieren des Andocksystems (1a; 1b; 10a) durch das autonome Fahrzeug (3) ermöglicht wird;
- Transportieren des Andocksystems (1a; 1b; 10a) mit dem autonomen Fahrzeug (3) zu einer Arbeitszone;
- Durchführen von Vorgängen des Andockens des Luftfahrzeugs (2) am Andocksystem (1a; 1b; 10a), das in der Arbeitszone positioniert ist.

## Claims

1. A mooring system (1a; 1b; 10a) for a mooring and a handling on the ground of an aerial vehicle (2) of the aerostat or dirigible balloon type, said mooring system (1a; 1b; 10a) comprising a platform (4) on which is mounted a mooring mast (5), and a carrier structure (6) capable of supporting the platform (4) on the ground, the platform (4) having at least one upper stage (41) which is raised above the ground and which delimits a reception area (42) designed to receive an autonomous vehicle (3) below the upper stage (41), said mooring system (1a; 1b; 10a) being **characterized in that** said upper stage (41) supports at least one lifting device (7) placed above the reception area (42) and configurable between:
- a rest configuration authorizing a reception of an autonomous vehicle (3) in the reception area (42) under the upper stage (41) and withdrawal of an autonomous vehicle (3) outside the reception area (42), and
- a lifting configuration wherein the lifting device (7) is able to lift the platform (4)/carrier structure (6) assembly and lift off the carrier structure (6) from the ground by resting on the autonomous vehicle (3) when the latter is present in the reception area (42) under the upper stage (41), thus authorizing a transport of the mooring system (1a; 1b; 10a) by the autonomous vehicle (3).

2. The mooring system (1a; 1b; 10a) according to claim 1, wherein the platform (4) has two upper stages (41) defining two reception areas (42) for receiving two autonomous vehicles (3) below the two upper stages (41).

3. The mooring system (1a; 1b; 10a) according to claim 1 or 2, wherein the upper stage (41) supports at least two lifting devices (7) placed above the concerned reception area (42).

4. The mooring system (1a; 1b; 10a) according to any one of the preceding claims, wherein the lifting device (7) comprises a movable part which is displaceable on the underside of the upper stage (41) between:
- a deployed position wherein the movable part protrudes on the underside of the upper stage (41) by a predefined deployment distance to be in the lifting configuration;
- a retracted position wherein the movable part does not protrude on the underside of the upper stage (41) or protrudes by a retraction distance less than the deployment distance in order to be in the rest configuration.

5. The mooring system (1a; 1b; 10a) according to any one of the preceding claims, wherein the reception area (42) extends parallel to a longitudinal direction (X1) extending between the front and the rear of the platform (4).

6. The mooring system (1a; 1b; 10a) according to the preceding claim, wherein the reception area (42) is open at both ends to be accessible by an autonomous vehicle (3) from the front and the rear of the platform (4).

7. The mooring system (1a; 1b; 10a) according to any one of the preceding claims, wherein the mooring mast (5) supports in an upper portion a support device (8; 80) designed to support a portion (20; 21; 22) of the aerial vehicle (2).

8. The mooring system (1a; 1b; 10a) according to the preceding claim, wherein the support device (8; 80) comprises an arch or a ring suitable to conform at least partially a rounded shape of the portion (20; 21; 22) of the aerial vehicle (2).

9. The mooring system (1a; 1b; 10a) according to any of claims 7 and 8, wherein the support device (8; 80) incorporates at least one damping element (81; 810) selected from the list comprising an airbag, a tire, a tensioned textile band, a hydraulic damper.

10. The mooring system (1a; 1b; 10a) according to any one of claims 7 to 9, wherein the mooring mast (5) supports in the upper portion a nose anchoring device (9; 90) for anchoring a nose (21) of the aerial vehicle (2).

11. A mooring assembly for a mooring and a handling on the ground of an aerial vehicle (2) of the aerostat or dirigible balloon type, said mooring assembly comprising at least one mooring system (1a; 1b; 10a) in accordance with any one of claims 1 to 10, and further comprising at least one autonomous vehicle (3), wherein the autonomous vehicle (3) is designed to be engaged in the reception area (42) under the upper stage (41) of the platform (4) of the mooring system (1a; 1b; 10a), and wherein the mooring assembly is configurable between:
- a static configuration, fixed on the ground, wherein the lifting device (7) of the mooring system (1a; 1b; 10a) is in the rest configuration and thus the carrier structure (6) of the mooring system (1a; 1b; 10a) rests on the ground, said static configuration being usable for storage operations of the mooring system (1a; 1b; 10a) in a storage area and for mooring and handling on the ground operations of the aerial vehicle (2) in a work area; and
- a movable configuration, wherein the autonomous vehicle (3) is engaged in the reception area (42) under the upper stage (41), and the lifting device (7) of the mooring system (1a; 1b; 10a) is in the lifting configuration by bearing on the autonomous vehicle (3) and thus the carrier structure (6) of the mooring system (1a; 1b; 10a) is lifted off the ground, thus authorizing a transport of the mooring system (1a; 1b; 10a) by the autonomous vehicle (3), in particular between the storage area and the work area.

12. The mooring assembly according to claim 11, wherein the autonomous vehicle (3) is an automatic guided vehicle or a rail vehicle.

13. A pair of mooring systems (1a, 1b) for a mooring and a handling on the ground of an aerial vehicle (2) of the aerostat or dirigible balloon type, said pair of mooring systems (1a, 1b) comprising two mooring systems (1a, 1b) in accordance with any one of claims 1 to 11, with a first mooring system (1a) for a mooring of a front portion (20) of the aerial vehicle (2) and a second mooring system (1b) for a mooring of a rear portion (22) of the aerial vehicle (2), the first mooring system (1a) being not physically connected to the second mooring system (1b).

14. The pair of mooring systems (1a, 1b) according to claim 13, wherein the first mooring system (1a) and the second mooring system (1b) are configured to be controlled on the displacement by geolocation or by a master/slave control when they are in the transport phase by means of autonomous vehicles.

15. A mooring method for a mooring and a handling on the ground of an aerial vehicle (2) of the aerostat or dirigible balloon type, said mooring method consisting in using at least one mooring system (1a; 1b; 10a) in accordance with any one of claims 1 to 10, and also in using at least one autonomous vehicle (3), wherein the autonomous vehicle (3) is designed to be engaged in the reception area (42) under the upper stage (41) of the platform (4) of the mooring system (1a; 1b; 10a), said mooring method comprising the following steps of:
- storing the mooring system (1a; 1b; 10a) in a storage area, with the lifting device (7) of the mooring system (1a; 1b; 10a) in rest configuration so that the carrier structure (6) of the mooring system (1a; 1b; 10a) rests on the ground in the storage area;
- engaging the autonomous vehicle (3) in the reception area (42) under the upper stage (41);
- displacing the lifting device (7) towards the lifting configuration by bearing on the autonomous vehicle (3), in order to lift the carrier structure (6) off the ground, thus authorizing a transport of the mooring system (1a; 1b ; 10a) by the autonomous vehicle (3);
- transporting the mooring system (1a; 1b; 10a) with the autonomous vehicle (3) to a work area;
- carrying out mooring operations for the aerial vehicle (2) on the mooring system (1a; 1b; 10a) which is positioned in the work area.
